# EUROPEAN PATENT APPLICATION

(11) **EP 0 551 203 A1**
(43) Date of publication of application: **14.07.1993**
(21) Application number: 93300119.0
(22) Date of filing: 08.01.1993
(51) Int. Cl.: B60B 21/12

(54) **Well-filler band**

(30) Priority: 09.01.1992 GB 9200375
(71) Applicant: TECHNOVIA PATENTS LIMITED, St Helier, Jersey, Channel Islands (GB)
(72) Inventor: Lüst, Richard, Milton Common, Oxon OX9 2JL (GB)
(74) Representative: Harrison, David Christopher

(57) **Abstract**

A well-filler band has rounded end flanges (4,4') conforming to the outer surface of fixing rollers (6,6').

## Description

The present invention relates to well-filler bands.

In the prior art (see GB-A-2090800, 2158785, 2082129, 2117331), well-filler bands are provided with end flanges bent at right angles, with a slot to locate fixing means. In GB-A-2233290 the fixing means are in the form of fixing bolts and/or rollers (the latter being cylindrical bars engaging the end flanges and drawn together by bolts or other screw-fixing), that hold adjacent ends of the well-filler band together by tightening generally tangential to a wheel rim and so secure the well-filler band around a wheel rim. The well-filler bands were also provided with feet that are intended to rest in the base of the well while maintaining a radially outermost face of the band approximately level with the floor of a wheel rim.

Such well-filler bands have the disadvantage that the right angle bend can straighten out when tension is applied to the well-filler band when it is attached to the wheel. Attempts to overcome this have usually involved making the well-filler band from heavier gauge materials or stamping strengthening ribs in it, making it heavier and thicker throughout its section, even where unnecessary.

Furthermore, the slot in the end flange of the well-filler band has to be long enough to house the fixing means but be closed at the end to prevent the fixing bolt sliding out. To make the slot end closure strong enough has required the end flange to become longer than would be desirable. The curvature of the rim means that the fixing bolt must protrude from the end of the band at a slight downward angle in order to engage the adjacent end of the well-filler band and will tend to bear on the end of the slot, placing the fixing bolt under considerable strain. To try to overcome this a longer slot could be used, but this would entail further increasing the length of the flange even further, and so the ends of the well-filler band would stand even higher in the well.

The need to provide the well-filler bands of the prior art with longer flanges at their ends means that considerable tension must be applied to the well-filler band to pull the intermediate feet into the base of the well. This fault, compounded by the weakness of the end flanges of existing well-filler bands and inevitable production irregularities means that well-filler bands do not fit properly on wheel rims and the well-filler band deforms and flattens adjacent the end flanges when it is fitted, and no practical amount of tension can cause proper seating of the intermediate foot or feet adjacent to the end flanges.

The fixing means at the ends of the well-filler bands of the prior art have often wider been than the well itself and they tend to foul on the side of the well and cause poor contact with the base of the well. This problem is also found with the feet on well-filler bands for wells with shallow sloping side or sides, as used in many wide wheels.

The fixing bolt and rollers of the prior art have had a roller with a hole drilled through the centre of the circular face into which a locking insert of e.g. nylon is positioned. This is then drilled and tapped at right angles to the hole, through which the bolt passes.

The present invention provides a well-filler band in which the end flanges are curved, preferably in at least a semicircle, to ensure that the end of the well filler band makes good contact with a rounded fixing means (usually a cylindrical roller) and does not straighten when the well-filler band is fitted to a wheel. Any length of material may be provided as a slot end closure without increasing the overall height of the flange, which is determined only by the curvature of the flange (which should be a function of the diameter of the rounded part of the fixing means) and the thickness of the material of the flange. In a preferred embodiment, the end of the well-filler band bends in face-to-face contact around half the periphery of a cylindrical roller and also forms an extended surface that is in face-to-face contact with the base of the well, increasing the strength and supporting ability of the end of the well-filler band.

The feet may be of unequal length with that or those adjacent the end flanges being slightly longer than that or those at the centre of the length of the well-filler band. This enables all of the feet to fit properly in the base of the well.

In a preferred embodiment of the present invention, the well-filler band can be coated e.g. with manganese phosphate or with a plastics material such as nylon, to avoid corrosion, especially between steel well-filler bands and aluminium wheels and vice versa, due to the interaction of the metals.

The feet of the well-filler band are preferably to be positioned close to the outside edge of the well, where the outside wall of the well usually being of greater inclination (closer to the plane normal to the axis of the wheel) than the laterally inner wall. The width of the feet is then chosen to correspond to a smallest well width, resulting in each foot resting on the base of the well, and not on the sloped wall of the well. In a preferred embodiment the feet and well-filler band are made in one piece, removing corrosion traps and making the well-filler band lighter as no extra parts need to be welded or rivetted onto it.

As the semi-circular end of the well-filler band has a large contact surface with the roller, the width of the roller can be reduced, thereby decreasing the width of the end of the well-filler band to more closely match the size of the feet. The full tensile strengths of the fixing bolt can be exploited, something which was frequently impossible in the prior art.

A preferred embodiment of the present invention will now be further described with reference to the following drawings:

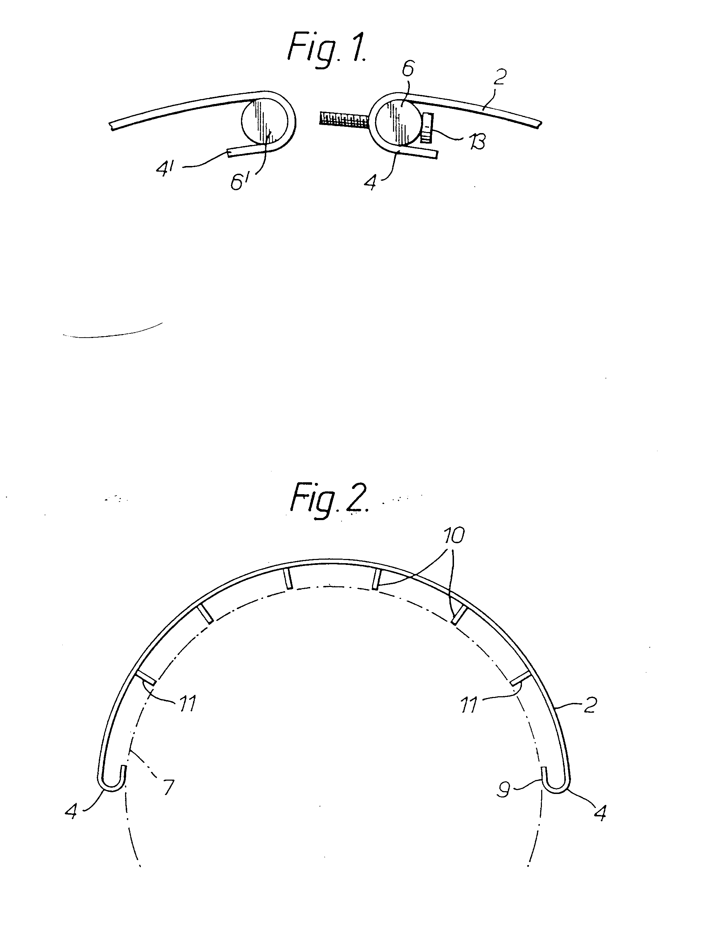

Figure 1 shows the ends of the well-filler band in a position to be joined,
Figure 2 shows the well-filler band arranged around the surface of the well,
Figure 3 shows the well-filler band extended linearly,
Figure 4 shows a section through the well with a steep inside wall,
Figure 5 shows a section through band modified for a well with a shallow sloping inside wall,
Figure 6 shows a shaped slot in the end of the well-filler band,
Figure 7 is a partial face view of a second embodiment, and
Figure 8 is a section on the line VIII-VIII, Figure 7.

A well-filler band 2 has end flanges 4 that are curved in a semicircle so that its inner face closely matches the outer radius of a roller 6, to ensure good contact between them. It is preferred that the end flange 4 of the well-filler band forms a foot 9, that locates in the base of the well 8 and supports the well-filler band 2, with an extreme end portion of the flange in face-to-face contact with the base 7 of a well 8.

The well-filler band 2 has a plurality of intermediate feet 10 that fit into the base of the well 8 and support the well-filler band 2 with its outer face approximately level with the floor 16 of the rim. These feet 10 preferably increase in size from the middle of the well-filler band 2 to the ends with at least one pair of feet 11 next adjacent to the end flanges being of an increased length. This helps to ensure that all the feet 10 remain in contact with the base of the well 8 and do not distort or stretch the well-filler band 2 when it is fitted and tensioned. In the specific embodiment the radial height of the end flanges 4 is 15.3 to 15.8mm, that of next feet 11, 16.65mm, and of the remaining feet 10, 13.65mm (measured in each case to the radially outer surface of band).

The width of the feet 10 is chosen to correspond to the smallest width of the base of the well, to avoid the feet 10 resting on the sloping wall(s) of the well 8.

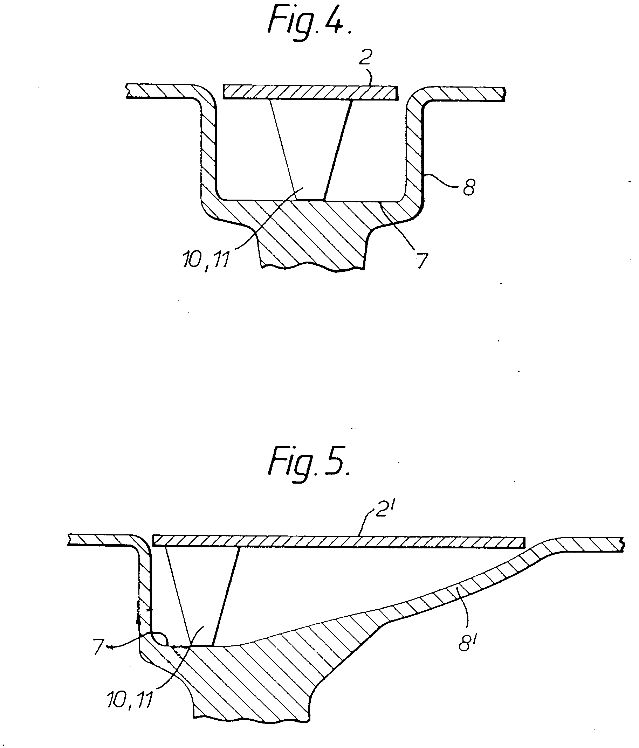

Figures 4 and 5 show how the feet 10,11 may be central in the width of the band or, where a band 2' is intended for an assymmetric well with one gently inclined wall 8', be off-centre.

The well-filler band 2 is secured by being positioned around the well of a rim, passing a bolt 13 through a slot 14 in one end flange 4 of the well-filler band 2 into which has been inserted a roller 6, into a slot 14 in the adjacent end 4', complete with its own roller 6' to receive the bolt 13, and rotating the bolt to screw-threadedly draw the rollers together.
Preferably the screw-threaded engagement is between the bolt and a nut fitting in a groove in the far face of the roller 6' so that it cannot rotate. The nut may have a locking insert e.g. of nylon.

The end 4' may be the other end of a one-piece band surrounding the whole of the rim or may be an end of another segment of a multi-piece band (usually two-piece) the segments of which when secured together surround the rim. The slot 14 in the end of the band 2 extends to adjacent the base to allow free arcuate movement of the bolt 13; this allows a strong join to be made without straightening the curved ends 4 of the well-filler band 2 or putting the bolt 13 under undue stress. Access to the head of the bolt for a screwdriver or socket spanner is also through the slot 14.

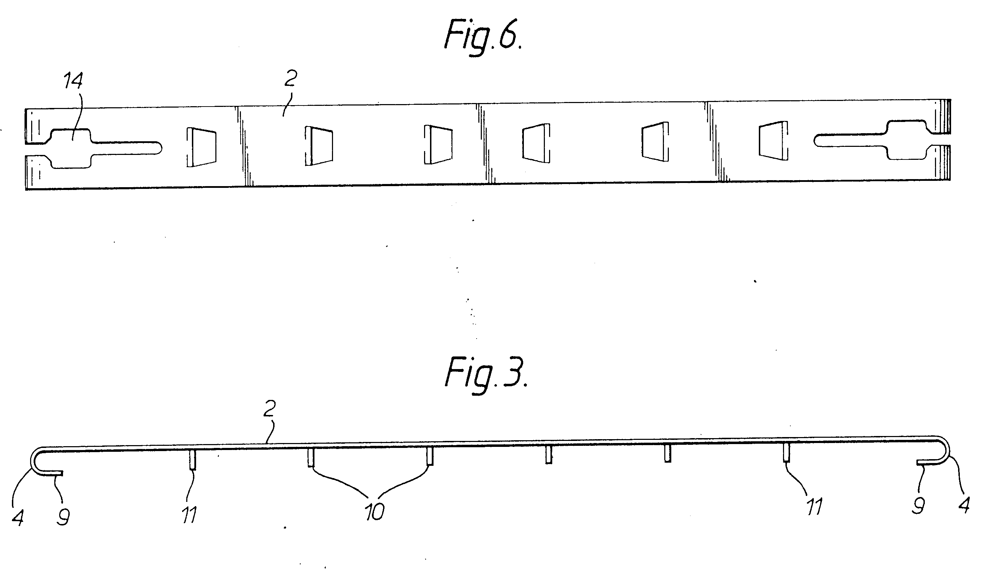

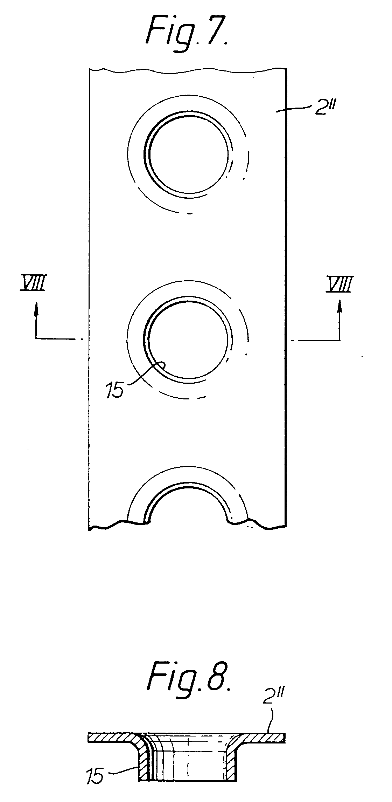

Figures 6 and 7 show a second embodiment. Feet 15 of the same function and depth as feet 10,11 are circular skirts formed by pressing out material of the band 2''. These feet are stronger in the radial direction than the lugs which are the feet 10,11. For this embodiment, aluminium alloy is the preferred material;
however, either may be made of any material of suitable tensile strength e.g. aluminium alloy or mild steel. An aluminium band of the second embodiment will be light enough to be fitted to high-performance cars without unacceptable loss of that performance, or if made of steel to be fitted to heavy duty truck or bus wheels.

We have found that using the curved ends 4,4' enables us to apply tension of over 9 Nm (6.6 lbs/ft) to either a one part or a multi-part band, a tension more than double that possible for prior-art aluminium bands and greater than the 9 Nm which is the maximum for prior-art steel bands.

Since the only stress to which the fixing bolt is subject is tensile (for which it is specifically designed, of course) a smaller and therefore lighter bolt can be used than was previously possible, even to achieve higher tensions. Furthermore, because of the smaller diameter of bolt the rollers may now be made of aluminium (including aluminium alloy) instead of the conventional steel while retaining adequate strength.

The reduced weight of the fixing now means that eccentric centrifugal forces are much less and may easily be balanced in a one part band by simple addition of a rivet as a counterweight at the position on the band which will be diametrically opposed to the fixing when the band is fitted.

## Claims

1. A well-filler band (2) having end flanges (4,4') and fixing means for securing those end flanges together tangentially of a wheel rim, the fixing means including rounded fixing means (6,6') for engagement with respective flanges and a means (13) to draw them together characterized in that the end flanges (4,4') extend arcuately and have an inner face conforming generally to the rounded outer face of the rounded fixing means (6,6').

2. A well-filler band according to claim 1 wherein the rounded fixing means are cylindrical rollers (6,6').

3. A well-filler band according to claim 1 or claim 2 wherein the flanges (4,4') extend arcuately through a semi-circle.

4. A well-filler band according to claim 3 wherein the flanges (4,4') extend beyond the semi-circle to provide a face engageable with the base (7) of a well whereby the flanges can act as feet (9) to support the well-filler band.

5. A well-filler band according to any one of the preceding claims having supporting feet (10,11,15) intermediate its ends, at least one pair of feet (11) nearest to the ends being of greater radial length than at least one pair of feet distant from the ends.

6. A well-filler band according to any one of the preceding claims wherein the feet are formed as circular skirts (15).

7. A well-filler band according to any one of the preceding claims wherein the rounded fixing means (6,6') are of aluminium.

8. A well-filler band according to any one of the preceding claims wherein the means drawing the fixing means together is a screw-threaded bolt (13) engaging a nut, the nut being received non-rotatably in a recess in the associated rounded fixing means (6').
